# EUROPÄISCHE PATENTSCHRIFT

(11) **EP 0 388 949 B1**
(45) Veröffentlichungstag und Bekanntmachung des Hinweises auf die Patenterteilung: **18.11.1993**
(21) Anmeldenummer: 90105430.4
(22) Anmeldetag: 22.03.1990
(51) Int. Cl.: G01B 11/04, G01B 11/02, B07C 5/10

(54) **Verfahren und Vorrichtung zum automatischen elektronischen Regeln der Länge von in Fliesspressen hergestellten Pressteilen**
Method and device for the automatic electronic control of the length of moulded articles produced in extruders
Méthode et dispositif pour le contrôle électronique automatique de la longueur des pièces moulées produites par des extrudeuses

(30) Priorität: 22.03.1989 DE 3909542
(43) Veröffentlichungstag der Anmeldung: 26.09.1990
(73) Patentinhaber: HERLAN & CO. MASCHINENFABRIK GMBH & CO. KG, D-76327 Pfinztal (DE)
(72) Erfinder: Köllner, Klaus Ulrich, D-7500 Karlsruhe 51 (DE); Maier, Hans-Joachim, D-7520 Bruchsal (DE); Simon, Karl-Heinz, D-7517 Waldbronn 2 (DE); Helget, Werner, D-7500 Karlsruhe 21 (DE); Krieg, Gunther, Prof. Dr., D-7500 Karlsruhe 1 (DE); Krieg, Wolfgang, D-7513 Stutensee 1 (DE)
(74) Vertreter: Patentanwälte Zellentin & Partner

(56) Entgegenhaltungen:
- EP-A- 0 034 088
- DE-A- 3 325 965
- US-A- 3 109 927

## Beschreibung

Die Erfindung betrifft ein Verfahren sowie eine Vorrichtung zum Regeln der Länge von in Fließpressen hergestellten Preßteilen gemäß dem Oberbegriff des Patentanspruches 1 bzw. 3.

Die üblicherweise zum Regeln der Länge von in Fließpressen hergestellten Preßteilen dienenden Arbeitsvorgänge bestehen darin, daß eine Bedienungsperson am Abtransport der FLießpresse steht und ein Preßteil entnimmt. Dieses Preßteil wird mit einem Musterteil verglichen oder von Hand ausgemessen und mit dem Sollmaß verglichen. Ist eine Korrektur notwendig, so löst eine weitere Bedienungsperson die Verschraubung des Verstellkeils des Pressenstempels der Fließpresse, stellt den Keil nach Gefühl entsprechend von Hand nach und zieht die Keilverschraubung wieder an. Ein neues Preßteil wird nach dem Verstell vorgang von der anderen Bedienungsperson vom Abtransport entnommen und mit dem Muster wieder verglichen. Diese Vorgänge werden wiederholt, bis keine Korrekturen mehr nötig sind. In letzter Zeit sind Einrichtungen entwickelt worden, mit deren Hilfe die Bedienungsperson erforderliche Keilkorrekturen durch Knopfdruck direkt vornehmen kann. Grundsätzlich ist die Handhabung der Preßteile jedoch dadurch erschwert, daß sie durch den Preßvorgang hohe Temperaturen aufweisen können. Es muß dann mit Handschuhen gearbeitet werden. Das Ausschleusen von unbrauchbaren Teilen oder von Teilen, die Störungen in den Folgemaschinen verursachen können, wird durch visuelle Kontrolle und anschließend manuell gesteuertes Herausblasen erreicht. Unter Umständen werden die Falschteile sogar von Hand entnommen. Um besonders sicher zu gehen, daß keine Falschteile weitertransportiert werden, landen oft mehr Teile als nötig in dem Abfallbehälter.

Ein Verfahren mit den Merkmalen des Oberbegriffs des Anspruchs 1 ist aus der DE-A-23 64 046 bekannt. Das Verfahren ist gekennzeichnet durch ein erstes optisches System zum Werfen von kollimierten Strahlen auf einen zu messenden Gegenstand, eine Projektionsfläche mit mehreren photoelektrischen Wandlern, die in einer Ebene angeordnet sind, ein zweites optisches System zum Erzeugen eines Bildes des Gegenstandes auf der Projektionsfläche und eine Operationsschaltung, die auf Grund von Signalen, die von den photoelektrischen Wandlern abgegeben werden und die Größe des vergrößerten Bildes darstellen, die Abmessung des genannten Gegenstands berechnet.

Diese Durchlichtmessung wird durch die beim Fließpressen auftretenden Nebel aus Schmiermitteln stark beeinträchtigt und gewährt nur einen oder wenige Meßwerte, so daß auch dadurch Fehler eingeführt werden können.

Es ist somit Aufgabe der Erfindung, das Verfahren sowie die Vorrichtung der eingangs genannten Art so weiterzubilden, daß eine vollautomatische Regelung der Längen der Preßteile möglich ist, wobei eine Vielzahl von Messungen möglich ist, und die auf eine Durchlichtmessung verzichtet.

Diese Aufgabe wird verfahrensgemäß durch die Merkmale des kennzeichnenden Teils des Patentanspruches 1 bzw. vorrichtungsgemäß durch die Merkmale des kennzeichnenden Teils des Patentanspruches 3 gelöst.

Vorteilhafte Ausgestaltungen hiervon sind Gegenstand von Unteransprüchen.

Mit Hilfe der Erfindung kann eine vollautomatische On-Line-Längenregelung für Preßteile vorgesehen werden, die bei Abweichungen von den Sollwerten eine rasche Vornahme von Keileinstellkorrekturen ermöglicht und dadurch den Ausschuß minimiert.

Die Erfindung wird nachstehend anhand der Zeichnung näher erläutert. Es zeigen:
- Fig. 1: ein einer Fließpresse zugeordnetes Transportmittel zum Abführen der Preßteile sowie eine über der Transporteinrichtung an der Meßstelle angeordnete Kamera;
- Fig. 2a, 2b: die räumliche Zuordnung von Kamera, Lampe und Meßobjekt (Preßteil) a) in Seitenansicht, b) in Draufsicht;
- Fig. 3: den Verlauf des Lichtreflexes auf der Oberseite eines Preßteils;
- Fig. 4: ein Blockschaltbild einer Videosignalverarbeitungseinrichtung; und
- Fig. 5: ein konkretes Schaltbild der Videosignalverarbeitungseinrichtung gemäß Fig. 4.

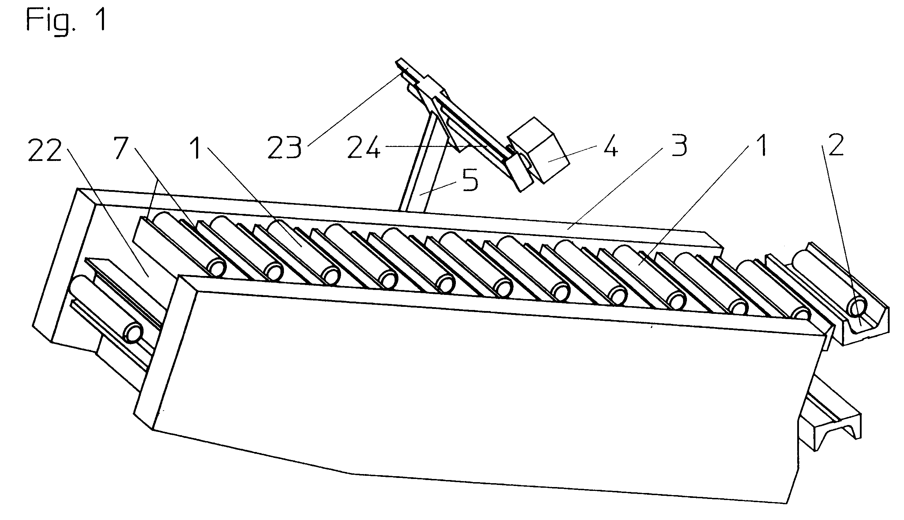

Schmiermittelnebel, erhöhte Temperatur, schlechte Licht- und Beleuchtungsverhältnisse sowie Erschütterungen schließen die Erfassung der Länge des Preßteils direkt an der Umformstelle aus. Wie aus Fig. 1 ersichtlich, werden die Preßteile 1 nach dem intermittierend arbeitenden Umformprozeß von einer nicht gezeigten Abnahmevorrichtung in Schalen 2 eines Transportmittels 22 abgelegt, das die Preßteile 1 zur Folgemaschine weiterbefördert. Die Preßteile 1 werden unmittelbar nach dem Austritt aus der Fließpresse ausgerichtet. Hierzu werden die Preßteile 1 mittels nicht gezeigten Blasdüsen an ein Leitblech 3 befördert, das dem Transportmittel 22 zugeordnet ist. Dies bedeutet, daß jetzt der Abstand der Schulter bzw. des Bodens des Preßteils 1 zum Leitblech 3 praktisch der Mantellänge des Preßteils entspricht. Deshalb braucht die über der Transporteinrichtung 22 angebrachte Kamera 4 nur die Lage der Schulter bzw. des Bodens des Preßteils 1 erfassen. Dies hat den Vorteil, daß nur ein Hell-Dunkel-Übergang ausgewertet werden muß, um eine Aussage über die Länge des Preßteils 1 zu erhalten. Entsprechend gering ist der elektronische Aufwand. Die Halterung 5 der Kamera 4 ist dabei so angebracht, daß die Preßteile 1 direkt nach der Ausrichtstation erfaßt werden können.

Zur Einhaltung der Grundstellung gibt es folgende Einstellmöglichkeiten: Die Neigung des Kamerablickwinkels ist zwischen 40 bis 50° einstellbar, und zwar bezogen auf die Abtransportrichtung der Preßteile. Die verstellbare Höhe über dem Transportmittel 22 ergibt sich aus der Abtastentfernung von 200 bis 300 mm. Die Längeneinstellung der Kamera wird querverschiebbar zur Preßteiltransportrichtung im entsprechenden Formatbereich vorgenommen.

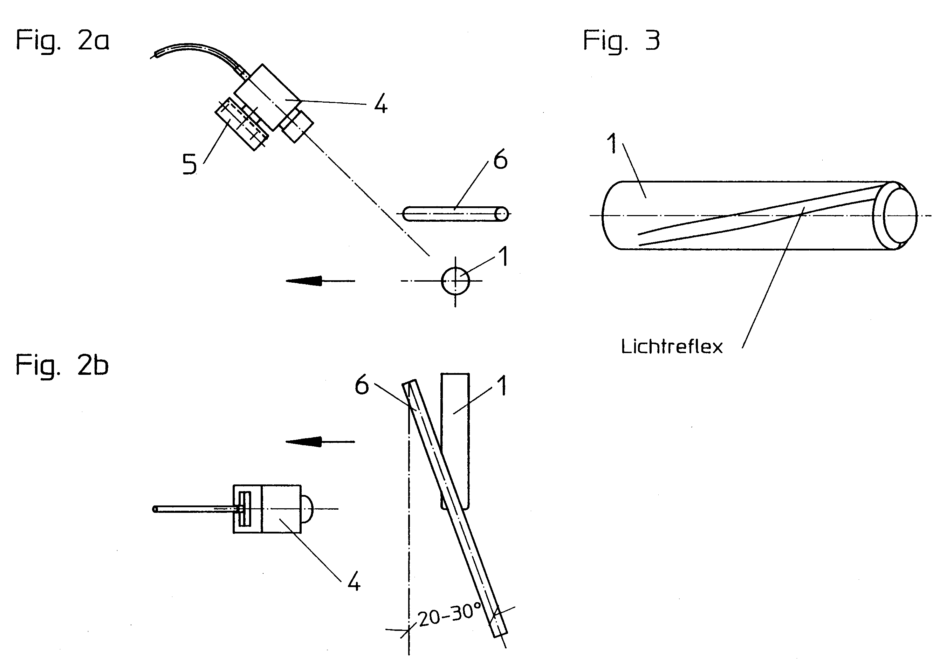

Wie in Fig. 2a dargestellt, benötigt die Kamera 4, um exakt arbeiten zu können, einen guten Kontrast zwischen Preßteil und Hintergrund (Transportstege, die die Schalen des Transportmittels ausbilden). Der Erfassungsbereich muß beleuchtet werden, um optimale Bedingungen zu erreichen. Hierzu wird eine Leuchte 6 direkt über dem Transportmittel 22 in ca. 100 mm Abstand zu den vorbeilaufenden Preßteilen 1 angebracht. Weiterhin muß die Leuchte 6 so montiert sein, daß der erzeugte Lichtreflex auf dem Preßteil 1 zuerst am Kopf und entsprechend versetzt am Ende erscheint. Die Leuchte 6 wird deshalb wie aus Fig. 2b ersichtlich um ca. 20 bis 30° verschwenkt angebracht. Demgegenüber müssen die Transportstege 7, die die Ränder der Schale 2 bilden, entsprechend ausgebildet sein, um einen hohen Kontrast zu erreichen. Holzstege werden aus diesem Grund dunkel gebeizt. Blechstege werden aus bruniertem Material gefertigt.

Die Fig. 3 zeigt den Verlauf des durch die Leuchte sich ergebenden Verlaufs des Lichtreflex auf der Preßteiloberseite.

Da das Preßteil 1 nicht sofort in das optimale Blickfeld und in den genauen Schärfentiefenbereich der Kamera 4 gelangt und eine einfache Komparatorschaltung somit zu verschiedenen Zeitpunkten, während das Preßteil das Blickfeld der Kamera 4 durchläuft, verschiedene Längen liefern würde, wird somit das Videosignal nach seiner optimalen Schärfe beurteilt, was somit einem konstanten Abstand zwischen Preßteil 1 und Kamera 4 entspricht.

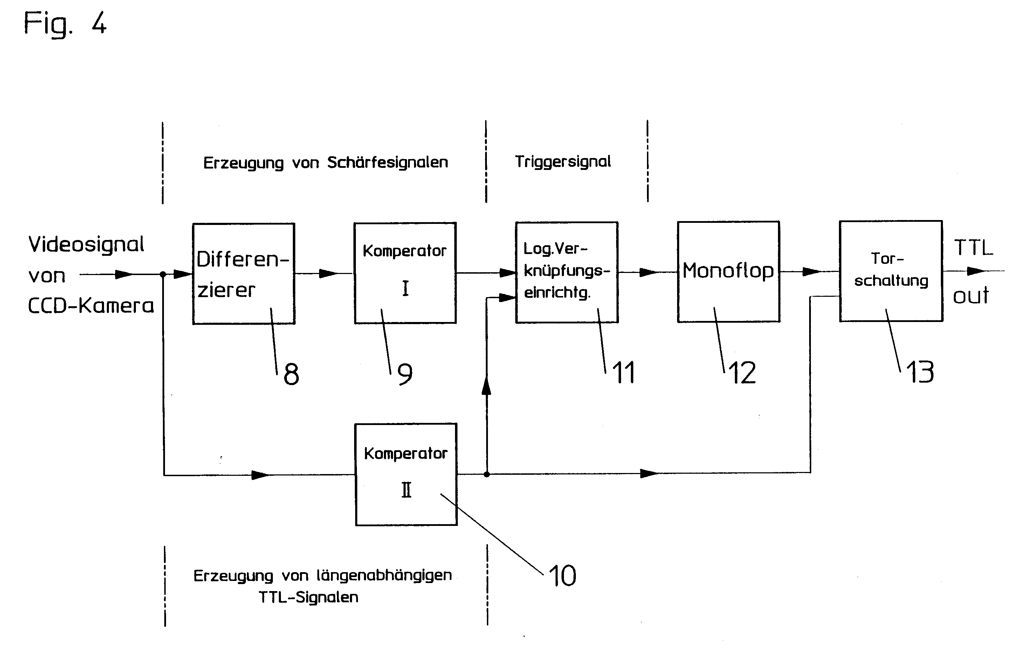

Die Beurteilung, wann das Videosignal die größte Schärfe aufweist, übernimmt, wie aus Fig. 4 ersichtlich, ein Differenzierer 8 in Verbindung mit einem ersten Komparator 9. Dieser Komparator 9 vergleicht die Amplitude des differenzierten Videosignals mit einem vorgegebenen Schwellwert. Überschreiten die Spannungsspitzen des differenzierten Signals des Komparators 9 den vorgegebenen Schwellwert, so schaltet der Komparator 9. Auch die Preßteilkante liefert einen starken Lichtreflex, der den Komparator zum Schalten bringt. Das Ausgangssignal ist aufgrund der Zeitkonstante des Differenzierers 8 in seiner Länge gedeht. Somit reicht der Kantenimpuls geringfügig in seiner Länge über die eigentliche Länge des Preßteils hinaus.

Ein aus dieser Kombination "Differenzierer 8 - erster Komparator 9" - gewonnenes Signal wird mit einem Signal eines zweiten Komparators 10, welches aus dem Videosignal entsteht, logisch verknüpft. Dieser zweite Komparator 10 liefert aufgrund seiner niederen Ansprechschwelle immer ein Ausgangssignal, welches von der momentanen Videosignalbreite abhängt. Der niedere Schwellwert ist notwendig, um die Kanten des Preßteils 1 sicher zu erfassen. Durch die logische Verknüpfung des Längensignals des zweiten Komparators 10 mit dem Schärfesignal des ersten Komparators 9 mittels einer logischen Verknüpfungseinrichtung 11 wird ein Signal erzeugt, das ein nachgeschaltetes Monoflop 12 zum Zeitpunkt der optimalen Schärfe des Videosignal triggert. Die Dauer des Monoflopimpulses reicht zeitlich in das nächste Meßintervall hinein und läßt nun über eine Torschaltung 13 das Ausgangssignal des zweiten Komparators 10 am Ausgang der Schaltung zu. Der am Ausgang der Schaltung nun anliegende Rechteckimpuls entspricht in seiner zeitlichen Länge der Länge des Meßobjekts bzw. Preßteils 1. Liegt andererseits kein Monoflopimpuls am Strobeeingang eines nachfolgend näher beschriebenen NAND-Glieds der Torschaltung 13 an, an dem auch das Signal des zweiten Komparators 10 anliegt, so gelangt kein dosenlängenabhängiges Signal an den Ausgang der Schaltung.

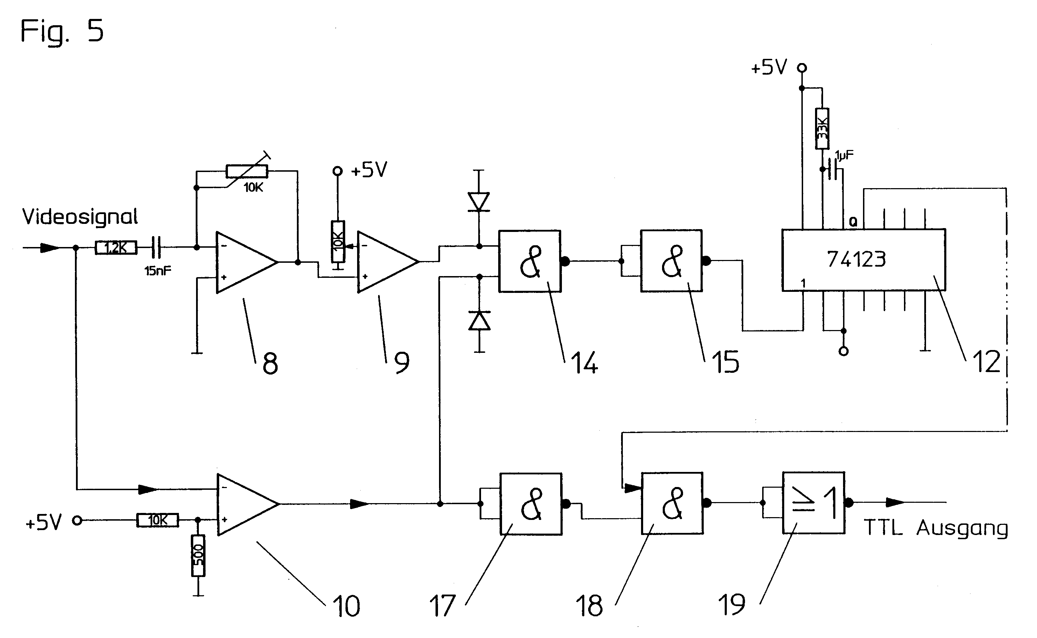

Wie aus Fig. 5 ersichtlich, die die konkrete Realisierung des in Fig. 4 gezeigten Blockschaltbilds wiedergibt, bestehen die beiden Komparatoren 9, 10 sowie der Differenzierer 8 aus Operationsverstärkern mit entsprechender Beschaltung. Die logische Verknüpfungseinrichtung 11, an deren beiden Eingängen die Ausgangssignale des ersten und zweiten Komparators 9, 10 anliegen, besteht aus einem ersten NAND-Glied 14, dem ein zweites NAND-Glied 15 nachgeschaltet ist. Das Ausgangssignal des zweiten NAND-Glieds 15 steuert das Monoflop 12 an. Die Torschaltung 13 besteht aus einem dritten und vierten NAND-Glied 17, 18 sowie einem NOR-Glied 19. Am Eingang des dritten NAND-Glieds 17 liegt das Ausgangssignal des zweiten Komparators 10 an. Der Ausgang des Monoflops 12 und der Ausgang des dritten NAND-Glieds 17 stehen mit dem vierten NAND-Glied 18 in Verbindung. Der Ausgang des vierten NAND-Glieds 18 ist schließlich mit dem Eingang des NOR-Glieds 19 verbunden, das als Ausgangssignal ein der Preßteillänge proportional es Signal liefert.

Das Ausgangssignal der vorstehend beschriebenen Videosignalverarbeitungseinrichtung stellt ein der Preßteillänge proportionales Signal dar, das mit einem Sollwert verglichen und zur Ansteuerung der elektromechanischen Keilverstellung benutzt wird. Die elektromechanische Keilverstellung beeinflußt die Länge nur indirekt durch Veränderung der Bodendicke bzw. Schulterdicke des Preßteils 1. Zwischen Längenänderung und Dickenänderung besteht ein mathematischer Zusammenhang, in den der Preßteildurchmesser und die Wandstärke einfließen. Die benötigten Werte werden durch Codierschalter zugeführt und die Regelelektronik wandelt die Sollwertlängenabweichung direkt in eine Drehwinkeländerung an der Verstellspindel um. Ein Elektromotor zur Spindelbetätigung wird eingeschaltet, und dann, wenn die Spindel mit angekoppeltem Winkelimpulsgeber die Verstellung ausgeführt hat, wieder ausgeschaltet.

Bei Formatwechsel muß die Längeregeleinrichtung an die sich ändernden Parameter angepaßt werden. Der Außendurchmesser und die Wanddicke werden jeweils an einem Codierschaltelement eingegeben. Das Längenmaß wird durch Verschieben der Kamera erreicht. Hierzu ist, wie aus Fig. 1 ersichtlich, eine Skala 23 an der Verschiebeeinrichtung 24 so angebracht, daß das Längenmaß direkt in mm ablesbar ist. Genausogut ist es möglich, diese Verschiebeeinrichtung 24 elektromotorisch anzutreiben, mit der Möglichkeit, auch das Längenmaß über Codierschaltelemente einzugeben. Gegebenenfalls ist noch eine Korrektur der Kameraneigung notwendig, um eine ausreichende Tiefenschärfe zu erhalten.

Nach abgeschlossener Formatumstellung kann die Fließpresse wieder in Betrieb gesetzt werden. Die Regelvorrichtung erkennt Abweichungen vom eingestellten Sollwert und nimmt dann die entsprechende Korrektur an der Keilverstellung vor. Weiterhin werden zu große, zu kleine und zumeist deformierte Preßteile erkannt und registriert, um sie später auszuschleusen. Dies bedeutet, daß während der Produktion kein manueller Eingriff nötig ist.

## Patentansprüche

1. Verfahren zum automatischen elektronischen Regeln der Länge von in Fließpressen hergestellten Preßteilen (1) wie Tuben, Dosen oder dergleichen durch Messen der Länge der durch ein Transportmittel (22) der Fließpresse herausgeführten Preßteile (1), Erzeugen eines Meßsignals, Vergleichen des Meßsignals mit einem das Sollmaß wiedergebenden Vorgabesignal und gegebenenfalls Erzeugen eines Steuersignals zum Nachstellen des Verstellteils des Preßstempels der Fließpresse,
**dadurch gekennzeichnet**,
daß die aus der Fließpresse durch das Transportmittel (22) herausgeführten Preßteile (1) einseitig ausgerichtet werden, wobei unmittelbar nach dem Ausrichten während des Vorbeitransports das freiliegende Ende der Preßteile (1) von einer Lichtquelle (6) beleuchtet und das von der Oberfläche reflektierte Licht von einer Kamera (4) zur Verarbeitung in Meßsignale erfaßt wird.

2. Verfahren nach Anspruch 1, dadurch gekennzeichnet, daß das Licht aus der Lichtquelle (6) unter einem Winkel in Abhängigkeit von der Geschwindigkeit des Transportmittels zur Längsachse des Preßteils (1) auf dessen Oberfläche aufgebracht wird.

3. Vorrichtung zur Durchführung des Verfahrens gemäß Anspruch 1 oder 2, mit
- einem Transportmittel (22), das Preßteile (1) aus der Fließpresse herausführt,
- einer Meßeinrichtung zum Feststellen der Preßteillänge,
- einer Vergleichseinrichtung zum Vergleich des der Preßteillänge entsprechenden Signals mit einem Sollwert und
- einer von dem der Abweichung der Preßteillänge vom Sollwert proportionalem Signal angesteuerten Stelleinrichtung, die eine entsprechende Nachstellung des Verstellkeils des Preßstempels der Fließpresse vornimmt,
dadurch gekennzeichnet, daß die Meßeinrichtung aufweist:
- eine dem Transportmittel (22) zugeordnete Preßteil-Ausrichteinrichtung (3),
- eine Beleuchtungseinrichtung (6), die zuerst am Kopf bzw. am Boden des Preßteils (1) und entsprechend versetzt am Ende einen Lichtreflex erzeugt,
- eine Bildaufnahmeeinrichtung (4), die das von der Oberfläche des Preßteils (1) reflektierte Licht erfaßt und ein entsprechende Videosignal erzeugt, und
- eine Videosignalverarbeitungseinrichtung (8 - 13), die das der Abweichung der Preßteillänge vom Sollwert proportionale Signal erzeugt, wobei die Länge des TTL-Signals dem gemessenen Ist-Wert entspricht.

4. Vorrichtung nach Anspruch 3, dadurch gekennzeichnet, daß die Preßteil-Ausrichteinrichtung ein Leitblech (3) sowie Blasdüsen aufweist, wobei die Blasdüsen die Preßteile (1) während ihres Transports mit einer Querseite in Anlage an das Leitblech (3) bringen.

5. Vorrichtung nach Anspruch 3 oder 4, dadurch gekennzeichnet, daß die Beleuchtungseinrichtung (6) in einem Winkel von 20 bis 30° zur Längsachse des Preßteils (1) an der Meßstelle angeordnet ist.

6. Vorrichtung nach einem der Ansprüche 3 bis 5, dadurch gekennzeichnet, daß die Bildaufnahmeeinrichtung (4) eine einzeilige CCD-Kamera ist.

7. Vorrichtung nach einem der Ansprüche 3 bis 6, dadurch gekennzeichnet, daß die Videosignalverarbeitungseinrichtung (8 - 13) einen Schärfesignalzweig sowie einen Längensignalzweig aufweist, deren Ausgangssignale zur Erzeugung des Ausgangssignals der Videosignalverarbeitungseinrichtung einer Logikschaltung (11 - 13) zugeführt werden.

8. Vorrichtung nach Anspruch 7, dadurch gekennzeichnet, daß der Schärfesignalzweig einen Differenzierer (8) und einen ersten Komparator (9) aufweist.

9. Vorrichtung nach Anspruch 7 oder 8, dadurch gekennzeichnet, daß der Längensignalzweig einen zweiten Komparator (10) mit niedriger Ansprechschwelle aufweist.

10. Vorrichtung nach Anspruch 8 und 9, dadurch gekennzeichnet, daß der erste und zweite Komparator (9, 10) und der Differenzierer (8) jeweils einen Operationsverstärker aufweisen.

11. Vorrichtung nach einem der Ansprüche 7 bis 10, dadurch gekennzeichnet, daß die logische Schaltung aus einer logischen Verknüpfungseinrichtung (11), einem Monoflop (12) und einer Torschaltung (13) besteht, daß die Verknüpfungseinrichtung (11) ein erstes NAND-Glied (14), dessen beide Eingänge mit den Ausgängen des ersten und zweiten Komparators (9 bzw. 10) in Verbindung stehen, sowie ein zweites NAND-Glied (15) aufweist, dessen Eingang mit dem Ausgang des ersten NAND-Glieds (14) in Verbindung steht,
daß der Ausgang des zweiten NAND-Glieds (15) mit dem Eingang des Monoflops (12) verbunden ist,
daß die Torschaltung (13) ein drittes und viertes NAND-Glied (17 und 18) sowie ein NOR-Glied (19) aufweist, wobei der Ausgang des zweiten Komparators (10) mit dem Eingang des dritten NAND-Glieds (17) verbunden ist und der Ausgang des Monoflops (12) sowie der Ausgang des dritten NAND-Glieds (17) mit den Eingängen des vierten NAND-Glieds verbunden sind und der Ausgang des vierten NAND-Glieds (18) mit dem Eingang des NOR-Glieds (19) in Verbindung steht, das als Ausgangssignal ein der Abweichung der Preßteillänge vom Sollwert proportionales Signal liefert, wobei die Abweichung vom Sollwert mit Hilfe eines Single-board Prozessors ermittelt und dann in eine Stellgröße umgewandelt wird.

## Claims

1. A method of automatically and electronically controlling the length of pressings (1) produced in extruders, such as tubes, cans or such like, by measuring the length of the pressings (1) conveyed out of the extruder by transport means (22), generation of a measurement signal, comparison of the measurement signal with a preset signal reproducing the desired measurement and if necessary generation of a control signal to readjust the adjustment part of the extrusion ram of the extrusion press, characterised in that the pressings (1) conveyed out of the extrusion press by the transport means (22) are aligned on one side whereby directly following alignment and during passing transport the exposed end of the pressings (1) is eliminated by a light source (6) and the light reflected from the surface is picked up by a camera (4) for processing to produce measurement signals.

2. A method according to claim 1, characterised in that the light from the light source (6) is applied to the surface of the pressing (1) at an angle which depends upon the speed of the transport means in relation to the longitudinal axis of the pressing.

3. An apparatus for carrying out the method according to claim 1 or 2, with
- transport means (22), which conveys pressings (1) out of the extrusion press,
- a measuring arrangement for establishing the length of the pressings,
- a comparing arrangement for comparing the signal corresponding to the length of the pressing with a desired value, and
- an adjusting means actuated by the signal proportional to the deviation of the pressing length from the desired value and which carries out a corresponding readjustment of the adjustment wedge of the extrusion ram of the extrusion press,
characterised in that the measuring arrangement comprises
- a pressing aligning means (3) associated with the transport means (22),
- a lighting means (6) which generates a reflection of light firstly at the head or bottom of the pressing (1) and with a corresponding offset, at the end thereof,
- an image recording means (4) which picks up the light reflected from the surface of the pressing (1) and generates a corresponding video signal, and
- a video signal processing means (8 to 13) which generates a signal proportional to the deviation of the pressing length from the desired value, the length of the TTL signal corresponding to the measured actual value.

4. An apparatus according to claim 3, characterised in that the pressing aligning means comprises a guide plate (3) or baffle and also blower nozzles, the blower nozzles bringing the transverse side of the pressings (1) to bear against the guide plate (3) or baffle while they are being transported.

5. An apparatus according to claim 3 or 4, characterised in that the lighting means (6) is disposed at an angle of 20 to 30° to the longitudinal axis of the pressing (1) at the measurement point.

6. An apparatus according to one of claims 3 to 5, characterised in that the image recording means (4) is a single-line CCD camera.

7. An apparatus according to one of claims 3 to 6, characterised in that the video signal processing means (8 to 13) comprises a sharpness signal branch and also a length signal branch the outputs from which are fed to a logic circuit (11 to 13) in order to generate the output signal from the video signal processing means.

8. An apparatus according to claim 7, characterised in that the sharpness signal branch comprises a differentiator (8) and a first comparator (9).

9. An apparatus according to claim 7 or 8, characterised in that the length signal branch comprises a second comparator (10) with a low response threshold.

10. An apparatus according to claim 8 and 9, characterised in that the first and second comparator (9, 10) and the differentiator (8) each comprise an operational amplifier.

11. An apparatus according to one of claims 7 to 10, characterised in that the logic circuit consists of a logic switching means (11), a monoflop (12) and a gate circuit (13) and in that the switching means (11) comprises a first NAND member (14), of which the two inputs are connected to the outputs of the first and second comparators (9, 10), as well as a second NAND member (15), the input of which is connected to the output of the first NAND member (14), and in that the output of the first NAND member (15) is connected to the input of the monoflop (12), and in that the gate circuit (13) comprises a third and a fourth NAND member (17 and 18) and a NOR member (19), the output of the second comparator (10) being connected to the input of the third NAND member (17), while the output of the monoflop (12) and the output of the third NAND member (17) are connected to the inputs of the fourth NAND member and the output of the fourth NAND member (18) is connected to the input of the NOR member (19) which delivers as an output signal a signal proportional to the deviation of the pressing length from the desired value, the deviation from the desired value being ascertained by a single board processor and then converted into a control magnitude.

## Revendications

1. Procédé pour le contrôle électronique automatique de la longueur de pièces moulées (1) telles que des tubes, des boîtes, etc, fabriquées dans des extrudeuses, grâce à la mesure de la longueur des pièces moulées (1) évacuées de l'extrudeuse par un moyen de transport (22), à la production d'un signal de mesure, à la comparaison du signal de mesure avec un signal prédéterminé reproduisant la cote théorique et, éventuellement, à la production d'un signal de commande pour le réajustement de l'élément de réglage du poinçon de l'extrudeuse, caractérisé en ce que les pièces moulées (1) évacuées de l'extrudeuse par le moyen de transport (22) sont alignées unilatéralement, étant précisé qu'aussitôt après l'alignement, pendant le transport, l'extrémité libre des pièces moulées (1) est éclairée par une source lumineuse (6) et la lumière réfléchie par la surface est détectée par une caméra (4) pour être transformée en signaux de mesure.

2. Procédé selon la revendication 1, caractérisé en ce que la lumière provenant de la source lumineuse (6) est appliquée sur la surface de la pièce moulée (1) suivant un angle qui est fonction de la vitesse du moyen de transport, par rapport à l'axe longitudinal de ladite pièce moulée (1).

3. Dispositif pour la mise en oeuvre du procédé selon la revendication 1 ou 2, comportant
- un moyen de transport (22) qui évacue les pièces moulées (1) de l'extrudeuse,
- un dispositif de mesure pour déterminer la longueur de la pièce moulée,
- un dispositif comparateur pour comparer le signal correspondant à la longueur de la pièce moulée avec une valeur théorique, et
- un dispositif de réglage commandé par le signal proportionnel à l'écart entre la longueur de la pièce moulée et la valeur théorique, qui procède à un réajustement approprié du coin de réglage du poinçon de l'extrudeuse,
caractérisé en ce que le dispositif de mesure comprend :
- un dispositif d'alignement de pièces moulées (3) associé au moyen de transport (22),
- un dispositif d'éclairage (6) qui produit un reflet de lumière tout d'abord au niveau de la tête ou du fond de la pièce moulée (1) et, décalé en conséquence, au niveau de son extrémité,
- un dispositif d'enregistrement d'image (4) qui détecte la lumière réfléchie par la surface de la pièce moulée (1) et qui produit un signal d'image complet correspondant, et
- un dispositif de traitement de signaux d'image complets (8-13) qui produit le signal proportionnel à l'écart entre la longueur de la pièce moulée et la valeur théorique, la longueur du signal TTL correspondant à la valeur réelle mesurée.

4. Dispositif selon la revendication 3, caractérisé en ce que le dispositif d'alignement de pièces moulées comporte une tôle de guidage (3) ainsi que des buses soufflantes, étant précisé que pendant le transport, les buses soufflantes amènent les pièces moulées, avec un côté transversal, en appui contre la tôle de guidage (3).

5. Dispositif selon la revendication 3 ou 4, caractérisé en ce que le dispositif d'éclairage (6) est disposé suivant un angle de 20 à 30° par rapport à l'axe longitudinal de la pièce moulée (1), au niveau du point de mesure.

6. Dispositif selon l'une des revendications 3 à 5, caractérisé en ce que le dispositif d'enregistrement d'image (4) est une caméra à CCD monolinéaire.

7. Dispositif selon l'une des revendications 3 à 6, caractérisé en ce que le dispositif de traitement de signaux d'image complets (8-13) comporte un branchement de signaux de netteté et un branchement de signaux de longueur dont les signaux de sortie sont transmis au dispositif de traitement de signaux d'image complets d'un circuit logique (11-13) en vue de la production du signal de sortie.

8. Dispositif selon la revendication 7, caractérisé en ce que le branchement de signaux de netteté comporte un différenciateur (8) et un premier comparateur (9).

9. Dispositif selon la revendication 7 ou 8, caractérisé en ce que le branchement de signaux de longueur comporte un second comparateur (10) à faible seuil de réponse.

10. Dispositif selon les revendications 8 et 9, caractérisé en ce que les premier et second comparateurs (9, 10) et le différenciateur (8) comportent chacun un amplificateur opérationnel.

11. Dispositif selon l'une des revendications 7 à 10, caractérisé en ce que le circuit logique se compose d'un dispositif de combinaison logique (11), d'une bascule monostable (12) et d'un circuit porte (13), en ce que le dispositif de combinaison (11) comporte un premier élément ET inverse (14) dont les deux entrées sont reliées aux sorties des premier et second comparateurs (respectivement 9 et 10), et un second élément ET inversé (15) dont l'entrée est reliée à la sortie du premier élément ET inverse (14), en ce que la sortie du second élément ET inversé (15) est reliée à l'entrée de la bascule monostable (12), en ce que le circuit porte (13) comporte des troisième et quatrième éléments ET inversé (17 et 18) et un élément NI (19), étant précisé que la sortie du second comparateur (10) est reliée à l'entrée du troisième élément ET inversé (17), que la sortie de la bascule monostable (12) et la sortie du troisième élément ET inversé (17) sont reliées aux entrées du quatrième élément ET inversé, que la sortie du quatrième élément ET inversé (18) est reliée à l'entrée de l'élément NI (19) qui fournit comme signal de sortie un signal proportionnel à l'écart entre la longueur de la pièce moulée et la valeur théorique, cet écart par rapport à la valeur théorique étant calculé à l'aide d'un processeur monopuce puis converti en une grandeur de réglage.
